# NEW EUROPEAN PATENT SPECIFICATION

(11) **EP 0 542 962 B2**
(45) Date of publication and mention of the opposition decision: **13.03.2002**
(45) Mention of the grant of the patent: 02.08.1995
(21) Application number: 92911454.4
(22) Date of filing: 08.06.1992
(51) Int. Cl.: G01J 3/44

(54) **CONFOCAL SPECTROSCOPY**
KONFOKALE SPEKTROSKOPIE
SPECTROSCOPIE A FOYER COMMUN

(30) Priority: 08.06.1991 GB 9112343; 16.11.1991 GB 9124397
(43) Date of publication of application: 26.05.1993
(73) Proprietor: RENISHAW plc, Wotton-Under-Edge Gloucestershire GL12 8JR (GB)
(72) Inventor: BATCHELDER, David, Neville, London E9 7AT (GB)
(74) Representative: Jackson, John Timothy
(86) International application number: GB9201026
(87) International publication number: WO9222793

(56) References cited:
- EP-A- 0 380 904
- EP-A- 0 485 803
- WO-A-88/07179
- DE-C- 3 037 983
- NATURE, vol. 347, 20 September 1990, pages 301-303; G.J. PUPPELS: "Studying single living cells and chromosomes by confocal raman microspectroscopy"
- APPLIED OPTICS, vol. 29, no. 33, 20 November 1990, New York, US; pages 4969-4980; D.KIRK VEIRS et al.: "Mapping materials properties with raman spectroscopie utilizing a 2-d detector"
- "Three-dimensional surface measurement using the confocal scanning microscope" by D. Hamilton et al, Applied Physics B 27, 1982, pages 211 to 213

## Description

### BACKGROUND OF THE INVENTION

This invention relates to apparatus and methods in which spectroscopy is used to analyse a sample, for example making use of the Raman effect.

The Raman effect is a phenomenon in which a sample scatters incident light of a given frequency, into a frequency spectrum which has lines caused by interaction of the incident light with the molecules making up the sample. Different molecular species have different characteristic Raman spectra, and so the effect can be used to analyse the molecular species present.

Prior arrangements of Raman analysis apparatus have been described in a paper "Raman Microprobe and Microscope with Laser Excitation", M Delhaye and P Dhamelincourt, Journal of Raman Spectroscopy, 3 (1975), 33-43, and also in our earlier International Patent Specification WO 90/07108. A sample is irradiated with monochromatic light from a laser, and the scattered light is analysed in order to select a particular line of the resulting Raman spectrum. The analysis may be performed by a dispersive device such as a diffraction grating; e.g. in a monochromator, or it may be performed as described in WO 90/07108 using a non-dispersive tunable filter. WO 90/07108 also discloses that the resulting Raman scattered light may be focused onto a charge-coupled device (CCD), which is a two-dimensional photo-detector array.

Other spectroscopic techniques are also known in which a sample is irradiated with monochromatic or even polychromatic light, and the light scattered is analysed. Examples include fluorescence spectroscopy and infra-red spectroscopy. The present invention is also applicable to such techniques.

It is possible to use such techniques in a confocal manner, in order to analyse only light scattered from a certain plane in the sample. This involves passing the scattered light through a spatial filter, comprising a very small pinhole (typically 10µm) at the focus of a lens system. Light scattered from the required plane is brought to a tight focus at the pinhole and passes through, whereas light from other planes is not so tightly focused and is blocked. See, for example, G.J. Puppels et al, Nature, vol. 347, 20th September, 1990, p.301-303. However, such a spatial filter is difficult to set up correctly, because of the need for careful alignment of the optical components to ensure tight focusing of the scattered light on the very small pinhole. For the same reason, it is difficult to maintain the optical components correctly in alignment after the initial setting up, and the system is also susceptible to vibration. The alignment is particularly difficult to perform in systems where only very low levels of scattered light are available for analysis, such as Raman systems, since it is then impossible to see the focused light

EP-A-485 803 is an earlier European patent application, published after the priority date of the present application. It discloses a confocal microscope in which a sample is illuminated with a grid of spots. These spots are then imaged onto photosensitive areas of a detector, which act confocally.

### SUMMARY OF THE INVENTION

The present invention provides spectroscopy methods according to claims 1 and 2.

The invention also provides apparatus for performing this method, according to claim 7.

### BRIEF DESCRIPTION OF THE DRAWINGS

Fig 1 is a schematic diagram of a first embodiment of Raman analysis apparatus,
Figs 2 and 3 are schematic plan views of parts of a CCD when used with the apparatus of Fig 1,
Fig 4 is a schematic diagram of further embodiments of Raman analysis apparatus,
Fig 5 is a schematic plan view of part of a CCD when used with the embodiments in Fig 4, and
Figs 6 and 7 are plan views of a CCD, used for explaining another embodiment of Raman analysis apparatus.

### DESCRIPTION OF PREFERRED EMBODIMENTS

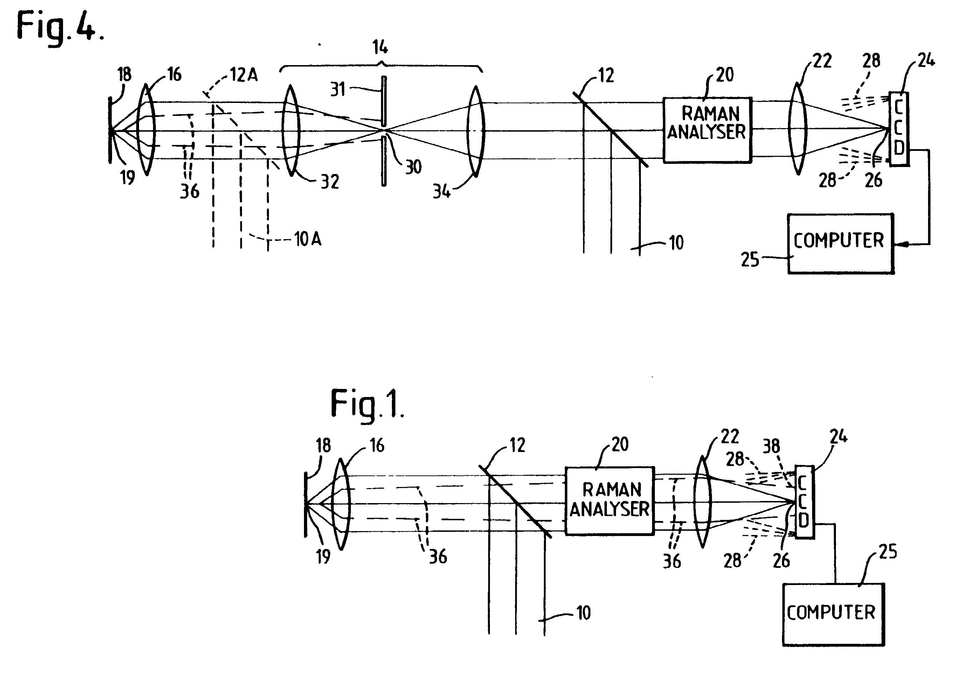

The first embodiment of the apparatus illustrated in Fig 1 is based upon the apparatus shown in WO 90/07108, which is incorporated herein by reference and to which the reader should refer for further details. An input laser beam 10 is reflected through 90° by a dichroic filter 12, placed at 45° to the optical path. The laser beam then passes to a microscope objective lens 16, which focuses it to a spot at its focal point 19 on a sample 18. Light is scattered by the sample at this illuminated spot, and is collected by the microscope objective 16 and collimated into a parallel beam which passes back to the dichroic filter 12. The filter 12 rejects Rayleigh scattered light having the same frequency as the input laser beam 10, and transmits the Raman scattered light. The Raman scattered light then passes to a Raman analyser 20.

The Raman analyser 20 may comprise one or more tunable non-dispersive filters for selecting a Raman line of interest, as disclosed in WO 90/07108. Alternatively, it may comprise a dispersive element such as a diffraction grating, either in a conventional monochromator arrangement or in the arrangement described in our UK Patent Application No. 9124408.7. In either case, the light from the analyser 20 is focused by a lens 22 onto a suitable photo-detector. Atwo-dimensional photo-detector array is preferred. In the present embodiment a charge-coupled device (CCD) 24 is used, which consists of a two-dimensional array of pixels, and which is connected to a computer 25 which acquires data from each of the pixels and analyses it as required. Where the Raman analyser 20 comprises a tunable non-dispersive filter, light of the selected Raman frequency is focused at 26 on the CCD 24. Where a dispersive element such as a diffraction grating is used, the analyser 20 produces not a single spot but a spectrum having various bands as indicated by broken lines 28, spread out in a line along the CCD 24.

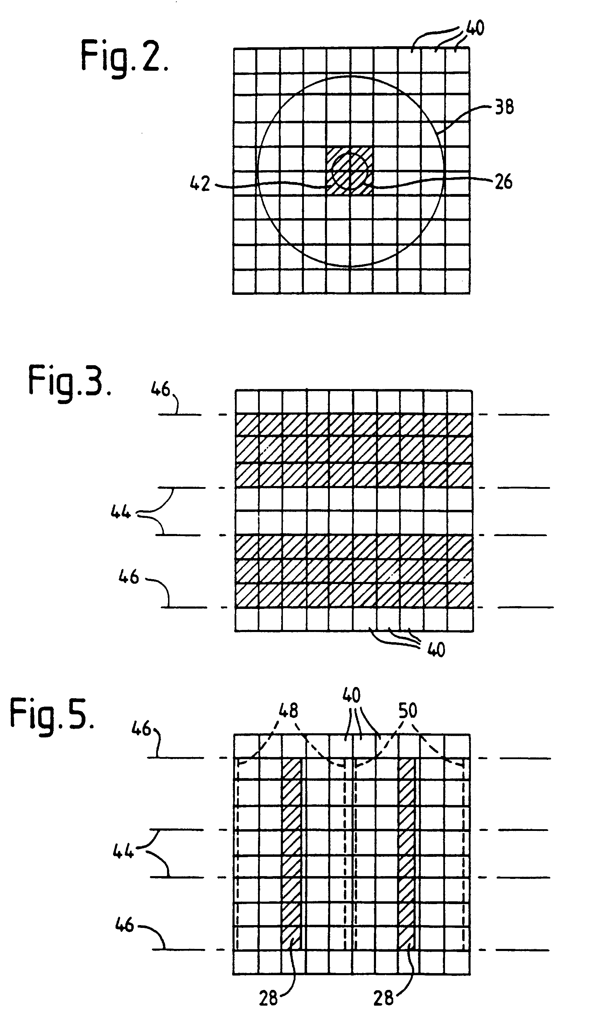

Light from the focal point 19 of the lens 16 is brought to a tight focus at 26 on the CCD. However, as illustrated by the broken lines 36, lightfrom in front of or behind the focal point 19 is brought to a more diffuse focus. In the case where a non-dispersive filter is used for the analyser 20, the effect is illustrated in Fig 2 which is a plan view of part of the CCD 24. Individual pixels of the CCD are shown as squares 40. The pixels may typically have a pitch of 22µm or less. A circle 26 represents the distribution of light scattered from the focal point 19, while a circle 38 represents the more diffuse focus of light scattered from elsewhere in the sample. When analysing data, the computer 25 bins together a few pixels 42, shown shaded, which receive the light focused at 26. Extraneous light from elsewhere within the circle 38 is ignored by the computer. This is readily achieved by computer software which reads the data from each pixel 40 serially, in turn, adding together the data from the pixels 42 and ignoring the rest.

The combination of the CCD with the computer thus gives the same effect as the pinhole in a conventional spatial filter. If the lens 16 is focused on the surface of the sample, it is possible to filter out light scattered from behind the surface within the sample, so that analysis of the surface itself may be carried out. Alternatively, it is possible to deliberately focus the lens 16 to a point within the sample, thereby filtering out light scattered from the surface. Thus confocal behaviour has been achieved without the use of an extra spatial filter.

When a diffraction grating or other dispersive element is used as the analyser 20 in Fig 1, and it is desired to view a full Raman spectrum rather than just a single Raman band, full confocal spectroscopy is not possible with such simple software. Partial confocal behaviour can be achieved, however, by operating the CCD 24 and computer 25 as indicated in Fig 3. The diffraction grating disperses the Raman spectrum from the sample across the CCD in a line. The width of the line is smallest for light which has been scattered from the focal point 19, for example in the unshaded region between the lines 44 on the CCD in Fig 3. Light from planes outside the focal plane which contains the focal point 19 would be scattered into a broader line, such as defined between the lines 46 in Fig 3. To obtain partial confocal behaviour, therefore, the computer 25 is programmed (in a similar manner to that described above) to capture data only from those pixels of the CCD lying in the region between the lines 44, and excluding light received elsewhere on the CCD. This excludes light received in the shaded region of Fig 3 from outside the focal point 19.

The reason that the arrangement of Fig 3 exhibits only partial confocal behaviour is because the spatial filtering provided by the CCD and computer occurs only in one dimension and not two. This can be overcome by using the embodiment of Fig 4, consisting of the same elements as found in Fig 1, with the addition of a spatial filter 14. The same reference numbers have been used as in Fig 1.

The spatial filter 14 comprises two lenses 32,34, and a screen 31 having a slit 30, extending normal to the plane of the paper. The lens 32 focuses the parallel beam of scattered light down to a very tight focus which passes through the slit 30, and the lens 34 collimates the light back into a parallel beam. The input laser beam 10 is likewise focused down to a very small spot to pass through the slit 30. The effect of the slit 30 is that the microscope objective 16 acts confocally. That is, substantially only the light scattered at the focal point 19 of the lens 16 passes through the slit 30. As indicated by broken lines 36, light which is scattered in front of or behind the focal point 19 is not brought to a focus at the aperture 30, and is therefore substantially blocked by the screen 31.

Fig 5 is a plan view, corresponding to Figs 2 and 3, of the CCD when used with the embodiment of Fig 4. Light passing through the slit 30 is dispersed by the diffraction grating analyser 20 into individual bands 28 of the Raman spectrum. Without the slit 30, light corresponding to the bands 28, but scattered from outside the focal point 19, would appear in broaderregions lying between the pairs of broken lines 48,50. It will be appreciated that the slit 30 provides only one-dimensional spatial filtering, such that each of the Raman bands 28 has been spatially filtered in the horizontal direction of Fig 5. However, some light from outside the focal point 19 can still pass through the slit 30 and be received in the area of Fig 5 which corresponds to the shaded regions of Fig 3. To overcome this, the computer 25 is programmed as in the Fig 3 embodiment, to process only data from the pixels lying between the lines 44 and to exclude the other pixels lying between the lines 46. This provides spatial filtering in the vertical direction, and together with the horizontal spatial filtering provided by the slit 30, full two-dimensional confocal behaviour is achieved.

An advantage of this arrangement over an arrangement in which a pinhole is used instead of the slit 30, is that it is much easier to align a slit than a pinhole.

If desired, it is possible to provide the dichroic filter in the position indicated in broken lines at 12A in Fig 4, instead of in the position indicated at 12. The laser beam then enters the system at 10A, instead of 10. This arrangement has the advantage that the input laser beam does not have to pass through the spatial filter 14. Consequently, there is no risk of the laser beam hitting the edges of the aperture 30 and causing scattering from there. Such scattering would be undesirable, since unless the edges of the aperture are kept extremely dean, any dirt will cause unknown Raman scattered light to pass through the analyser 20 and be registered on the CCD 24. Conversely, however, arranging the dichroic filter at the position 12 has the advantage that the easily visible laser light can be used to adjust the positioning the aperture 30 when setting the apparatus up. With the dichroic filter at 12A, the Raman scattered light passing through the dichroic filter to the spatial filter 14 is insufficient to be visible. Furthermore, placing the dichroic filter at 12 means that the spatial filter 14 can easily be added to the existing apparatus as described in WO 90/07108, between the microscope and the remainder of the apparatus, and is easily accessible for adjustment.

In order to act as a spatial filter, the width of the slit 30 should be very small, typically 10µm or even less. A maximum width might be 50µm. Thus, the slit 30 should not be confused with the entrance and exit slits commonly provided in conventional monochromators which are much larger, say 200µm at the least, in order to collect an adequate amount of light.

A further possibility is to use those pixels of the CCD which are not otherwise used (e.g. those outside the circle 38 (Fig 2) or outside the lines 46 (Figs 3 and 5)) to detect the DC level of background light. This can then be subtracted by the computer 25 from the signals produced by the pixels of interest.

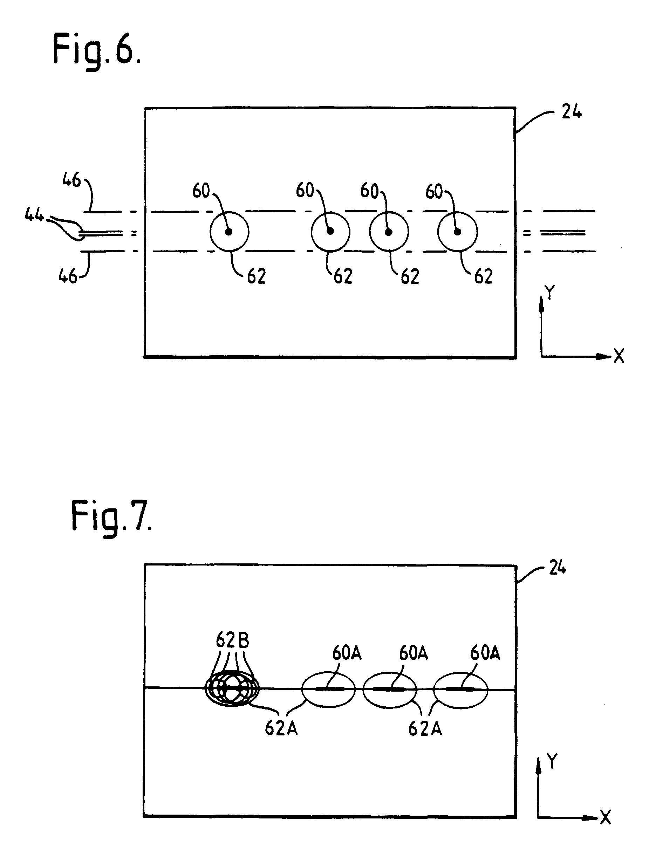

Figs 4 and 5 above have illustrated how full confocal behaviour can be obtained when a dispersive device such as a diffraction grating is used as the analyser 20. Figs 6 and 7 will now be used to describe techniques in which similar results are achieved, but without the need for the spatial filter 14 (that is, using hardware as shown in Fig 1). These techniques involve the use of more sophisticated image processing software within the computer 25, to analyse the data received from the CCD 24. Compared with the embodiment of Figs 4 and 5, therefore, these techniques have the advantage of a simpler and cheaper opto-mechanical arrangement, at the expense of computer processing which is more time consuming and which may require a larger computer.

Fig 6 is a view of the CCD 24 corresponding to Fig 3, but showing more detail. The bands of the Raman spectrum produced by the dispersive analyser 20 (in an idealised case) are indicated by the small spots 60, lying within the lines 44. Such an idealised picture would only be obtained, however, if the following three assumptions were valid:
(a) the illumination of the sample 18 would need to be point-like, rather than illumination over a small area;
(b) all scattering would have to be from the focal plane of the lens 16, and not from adjacent planes above or below the focal point; and
(c) the Raman scattering would need to be caused by the interaction of photons with phonons having a very precisely defined frequency value, so that each Raman band is sharp and has a very narrow width (i.e. a precisely defined wave number).

In real life, of course, these assumptions cannot be completely satisfied. The result of non-satisfaction of assumptions (a) and (b) will be a blurring of the image, as indicated by the larger cirdes 62 in Fig 6, within the lines 46. The effect of not having a precisely defined phonon frequency (assumption (c)) is to broaden each of the Raman bands, giving the lines 60A shown in Fig 7 in place of the spots 60 shown in Fig 6. Correspondingly, the blurring is now as shown by the ellipses 62A, instead of the cirdes 62. The purpose of confocal techniques such as in the preferred embodiments of the present invention is to reduce the blurring effect particularly where assumption (b) is not satisfied.

The image processing algorithms which may be performed by software in the computer 25 have the effect of reducing or removing the blurring, to recover the spots 60 from the circles 62, or to recover the lines 60A from the ellipses 62A. In either case, the first step of the algorithm is to read all the data of the image from the CCD into the memory of the computer 25 (or into a suitable storage medium such as a hard disk). The data is stored within the computer in an array, having one storage location corresponding to each pixel of the CCD.

The next step of the algorithm is to scan the stored data in a direction corresponding to the direction X shown in Figs 6 and 7. This may be performed along a row of the stored array of data corresponding to one row of pixels within the lines 44. From this scan, the algorithm determines the point of maximum illumination in the middle of each circle 62. In a simple case, in which the circles 62 are assumed to be truly circular, and no information is required about the width of each individual Raman band, the algorithm can now output the position of each point of maximum illumination, in terms of the wave number of the corresponding Raman band. In this simple case, the algorithm can then (for each of the circles 62) determine the sum (or the average) of the values of the illumination which have just been scanned within that circle 62. This value is also output, to give an intensity value associated with each Raman band.

A more complicated algorithm may scan all the pixels between the lines 46 (i.e. a two-dimensional scan instead of the previous one-dimensional scan). For each of the circles 62, this algorithm then determines the centroid, and outputs the position of that centroid in the X direction, in terms of the wave number of the corresponding Raman band. Again, the intensity of this Raman band may be determined by summing or averaging the values just scanned within the circle 62 concerned.

However, neither of the above two algorithms give information about the width of the Raman band, as indicated by the lines 60A in Fig 7. Neither do they give information about the shape of the Raman band (i.e. the intensity distribution within the line 60A). More sophisticated image processing techniques may be utilised if such information is required. For this, the software may perform an algorithm as follows. This algorithm is based upon the assumption that the ellipse 62A may be considered as a number of imaginary, overlapping circles 62B, each imaginary circle being centred upon a different pixel within the line 60A, and each imaginary circle corresponding to the blurring (produced in the same way as in a circle 62 in Fig 6).

This algorithm proceeds as follows. Firstly, the data for an ellipse 62A is scanned as previously, to determine the centroid or point of maximum illumination of the ellipse. Next, the data for a column of pixels which includes this point is scanned in the Ydirection, to determine the intensity distribution at various different radii from this centre point. As an approximation, it may be assumed that this intensity distribution corresponds to that of the imaginary circle which is centred on the pixel at the centroid of the ellipse, and that this imaginary circle has the same distribution in the X direction. However, the distribution as measured in the X direction will not correspond, since this measured distribution will also include contributions from all the other imaginary circles.

The next step of the algorithm, therefore, is to repeat this scan in the Y direction, for each of the other imaginary circles. That is, a Y distribution is determined corresponding to each pixel along the line 60A. To obtain a true intensity value for a given pixel in the line 60A, the algorithm next subtracts from the measured intensity value of that given pixel the contributions from all the other imaginary circles. For each of the imaginary circles, the value to be subtracted is the intensity value for the appropriate radius within that circle, determined from the Y distribution scan corresponding to that circle. The appropriate radius to use corresponds to the distance between the pixel under consideration and the centre of the circle concerned. Such a subtraction takes place for each of the imaginary circles. The whole process is repeated for every pixel along the line 60A.

The final step of this algorithm is to output the resulting Intensity value for each pixel within the line 60A, along with the corresponding wave number (position in the X direction).

It is of course possible to devise even more sophisticated image processing algorithms if desired. For instance, algorithms may be devised to process blurring which is more complex than indicated by the circles 62 or ellipses 62A. Examples include cases where the illuminated area 19 of the sample 18 has a non-uniform surface roughness, or has a faceted surface (e.g. diamond film).

The methods described above may be used in an analogous fashion for other spectroscopic techniques than Raman spectroscopy, e.g. fluorescence spectroscopy and infra-red spectroscopy.

## Claims

1. A spectroscopy method comprising:
illuminating a sample (18), to obtain therefrom a spectrum of scattered light;
analysing said spectrum;
passing at least one component of the analysed spectrum to a photodetector (24) which comprises an array of pixels (40), light scattered from a given plane in the sample being brought to a tight focus in a given area (42,44,60) on the photodetector; and
detecting light which is received in said given area (42,44,60) on the photodetector;
**characterised in that** light scattered from other planes in the sample is brought to a more diffuse focus (38,46,62) on the photodetector or on a plane thereof; and the light received in said given area (42,44,60) is detected without or separately from light outside said given area by selectively binning together the data from pixels (40) in said given area, thereby reducing the effect of light scattered from said other planes in the sample.

2. A spectroscopy method comprising:
illuminating a sample (18), to obtain therefrom a spectrum of scattered light;
analysing said spectrum;
passing the analysed spectrum to a photodetector (24), light scattered from a given plane in the sample being brought to a tight focus in a given area (44) on the photodetector; and
detecting light which is received in said given area (44) on the photodetector;
**characterised in that** light scattered from other planes in the sample is brought to a more diffuse focus (46) on the photodetector or on a plane thereof; the light received in said given area (44) is detected without or separately from light outside said given area, thereby reducing the effect of light scattered from said other planes in the sample; and said given area (44) is defined by a region extending between parallel lines across the detector and along which the spectrum is dispersed, so that said step of detecting light in said given area provides confocal action in one dimension.

3. A method according to claim 2, wherein confocal action in a second dimension is provided by passing the light through a spatial filter (14).

4. A method according to any one of the preceding claims, in which the sample (18) is illuminated at a focused spot (19).

5. A method according to any one of the preceding claims, wherein the photodetector (24) comprises a two-dimensional array of pixels (40), and the light which is received in said given area (42,44,60) is detected by processing data representing an image received by said array.

6. A method according to any one of the preceding claims, wherein said spectrum is a spectrum of Raman scattered light.

7. Spectroscopy apparatus comprising:
means (10,12,16) for illuminating a sample (18), to obtain therefrom a spectrum of scattered light;
means (20) for analysing said spectrum;
a photodetector (24);
means (22) for passing and focusing the analysed spectrum to the photodetector, light scattered from a given plane in the sample being thereby brought to a tight focus in a given area (44) on the photodetector; and
means (24,25) for detecting light which is received in said given area (44) on the photodetector;
**characterised in that** light scattered from other planes in the sample is brought to a more diffuse focus (46) on the photodetector or a plane thereof; said detecting means (24,25) detects the light received in said given area (44) without or separately from light outside said given area, thereby reducing the effect of light scattered from said other planes in the sample; and said given area (44) is defined by a region extending between parallel lines across the detector and along which the spectrum is dispersed, so that detecting the light in said given area provides confocal action in one dimension.

8. Apparatus according to claim 7, wherein a spatial filter (14) is provided, through which the light is passed, the spatial filter providing confocal action in a second dimension.

9. Apparatus according to claim 7 or claim 8, in which the illuminating means (10,12,16) is arranged to illuminate the sample (18) at a focused spot (19).

10. Apparatus according to any one of claims 7 to 9, herein the photodetector (24) comprises a two-dimensional array of pixels (40), and including computing means (25) for receiving data from the array, representing an image received by the array, and for processing said image data to detect the light which is in said given area (42,44,60).

11. Apparatus according to any one of claims 7 to 10, wherein said spectrum is a spectrum of Raman scattered light.

## Patentansprüche

1. Spektroskopieverfahren mit den Schritten, dass:
eine Probe (18) beleuchtet wird, um daraus ein Spektrum gestreuten Lichts zu erhalten;
das Spektrum analysiert wird;
zumindest eine Komponente des analysierten Spektrums zu einem Photodetektor (24) geführt wird, der ein Feld von Pixeln (40) umfasst, wobei Licht, das aus einer gegebenen Ebene in der Probe gestreut wird, zu einem engen Fokus in einem gegebenen Bereich (42, 44, 60) auf dem Photodetektor gebracht wird; und
Licht detektiert wird, welches in dem gegebenen Bereich (42, 44, 60) auf dem Photodetektor empfangen wird;
**dadurch gekennzeichnet,**
**dass** Licht, das aus anderen Ebenen in der Probe gestreut wird, zu einem diffuseren Fokus (38, 46, 62) auf dem Photodetektor oder auf einer Ebene davon gebracht wird, und das Licht, das in dem gegebenen Bereich (42, 44, 60) empfangen wird, ohne oder separat von Licht außerhalb des gegebenen Bereiches detektiert wird, indem selektiv die Daten von Pixeln (40) in dem gegebenen Bereich zusammengenommen werden, wodurch der Effekt von Licht, das aus den anderen Ebenen in der Probe gestreut wird, verringert wird.

2. Spektroskopieverfahren mit den Schritten, dass:
eine Probe (18) beleuchtet wird, um davon ein Spektrum gestreuten Lichtes zu erhalten;
das Spektrum analysiert wird;
das analysierte Spektrum an einen Photodetektor (24) geführt wird, wobei Licht, das aus einer gegebenen Ebene in der Probe gestreut wird, zu einem engen Fokus in einem gegebenen Bereich (44) auf dem Photodetektor gebracht wird; und
Licht detektiert wird, das in dem gegebenen Bereich (44) auf dem Photodetektor empfangen wird;
**dadurch gekennzeichnet, dass**
Licht, das von anderen Ebenen in der Probe gestreut wird, zu einem diffuseren Fokus (46) auf dem Photodetektor oder auf einer Ebene davon gebracht wird, das Licht, das in dem gegebenen Bereich (44) empfangen wird, ohne oder separat von Licht außerhalb des gegebenen Bereiches detektiert wird, wodurch der Effekt von Licht, das aus den anderen Ebenen in der Probe gestreut wird, verringert wird, und der gegebene Bereich (44) durch einen Bereich definiert ist, der sich zwischen parallelen Linien über den Detektor erstreckt und entlang dem das Spektrum dispergiert wird, so dass der Schritt zur Detektion von Licht in dem gegebenen Bereich eine konfokale Wirkung in einer Dimension vorsieht.

3. Verfahren nach Anspruch 2, wobei eine konfokale Wirkung in einer zweiten Dimension dadurch vorgesehen wird, dass das Licht durch einen räumlichen Filter (14) geführt wird.

4. Verfahren nach einem der vorhergehenden Ansprüche, wobei die Probe (18) bei einem fokussierten Punkt (19) beleuchtet wird.

5. Verfahren nach einem der vorhergehenden Ansprüche, wobei der Photodetektor (24) ein zweidimensionales Feld von Pixeln (40) umfasst, und das Licht, das in dem gegebenen Bereich (42, 44, 60) empfangen wird, detektiert wird, indem Daten verarbeitet werden, die ein Bild repräsentieren, das von dem Feld empfangen wird.

6. Verfahren nach einem der vorhergehenden Ansprüche, wobei das Spektrum ein Spektrum Raman-gestreuten Lichtes ist.

7. Spektroskopievorrichtung mit:
einem Mittel (10, 12, 16) zur Beleuchtung einer Probe (18), um davon ein Spektrum gestreuten Lichtes zu erhalten;
einem Mittel (20) zur Analyse des Spektrums;
einem Photodetektor (24);
einem Mittel (22) zum Führen und Fokussieren des analysierten Spektrums an den Photodetektor, wobei Licht, das aus einer gegebenen Ebene in der Probe gestreut wird, dadurch zu einem engen Fokus in einem gegebenen Bereich (44) auf den Photodetektor gebracht wird; und
einem Mittel (24, 25) zur Detektion von Licht, das in dem gegebenen Bereich (44) auf dem Photodetektor empfangen wird;
**dadurch gekennzeichnet, dass**:
Licht, das aus anderen Ebenen in der Probe gestreut wird, zu einem diffuseren Fokus (46) auf dem Photodetektor oder auf einer Ebene davon gebracht wird, das Detektionsmittel (24, 25) das Licht, das in dem gegebenen Bereich (44) empfangen wird, ohne oder separat von Licht außerhalb des gegebenen Bereiches detektiert, wodurch der Effekt von Licht, das aus den anderen Ebenen in der Probe gestreut wird, verringert wird, und der gegebene Bereich (44) durch einen Bereich definiert ist, der sich zwischen parallelen Linien über den Detektor erstreckt und entlang dem das Spektrum dispergiert wird, so dass eine Detektion des Lichtes in dem gegebenen Bereich eine konfokale Wirkung in einer Dimension vorsieht.

8. Vorrichtung nach Anspruch 7, wobei ein räumlicher Filter (14) vorgesehen ist, durch welchen das Licht geführt wird, wobei der räumliche Filter eine konfokale Wirkung in einer zweiten Dimension vorsieht.

9. Vorrichtung nach Anspruch 7 oder Anspruch 8, wobei das Beleuchtungsmittel (10, 12, 16) so angeordnet ist, um die Probe (18) bei einem fokussierten Punkt (19) zu beleuchten.

10. Vorrichtung nach einem der Ansprüche 7 bis 9, wobei der Photodetektor (24) ein zweidimensionales Feld aus Pixeln (40) umfasst und ein Berechnungsmittel (25) zum Empfang von Daten von dem Feld umfasst, die ein Bild repräsentieren, das durch das Feld aufgenommen wird, und zum Bearbeiten der Bilddaten, um das Licht zu detektieren, das in dem gegebenen Bereich (42, 44, 60) vorhanden ist.

11. Vorrichtung nach einem der Ansprüche 7 bis 10, wobei das Spektrum ein Spektrum Raman-gestreuten Lichts ist.

## Revendications

1. Procédé de spectroscopie consistant à:
éclairer un échantillon (18) pour obtenir à partir de ce dernier un spectre de lumière diffusée;
analyser ledit spectre;
faire passer au moins une composante du spectre analysé vers un photodétecteur (24) comprenant un ensemble de pixels (40), la lumière diffusée à partir d'un plan donné dans l'échantillon étant amenée vers un foyer étroit dans une zone donnée (42, 44, 60) sur le photodétecteur; et
à détecter la lumière qui est reçue dans ladite zone donnée (42, 44, 60) sur le photodétecteur;
**caractérisé en ce que** la lumière diffusée depuis d'autres plans dans l'échantillon est amenée vers un foyer plus diffus (38, 46, 62) sur le photodétecteur ou sur un plan de ce dernier, et la lumière reçue dans ladite zone donnée (42, 44, 60) est détectée sans ou séparément de la lumière placée à l'extérieur de ladite zone donnée, en plaçant sélectivement les données provenant des pixels (40) réduisant ainsi l'effet de lumière diffusée depuis les autres dits plans dans l'échantillon.

2. Procédé de spectroscopie consistant à:
éclairer un échantillon (18) pour obtenir à partir de ce dernier un spectre de lumière diffusée;
analyser ledit spectre;
faire passer le spectre analysé vers un photodétecteur (24), la lumière diffusée à partir d'un plan donné dans l'échantillon étant amenée vers un foyer étroit dans une zone donnée (44) sur le photodétecteur; et
à détecter la lumière qui est reçue dans ladite zone donnée (44) sur le photodétecteur;
**caractérisé en ce que** la lumière diffusée depuis d'autres plans dans l'échantillon est amenée vers un foyer plus diffus (46) sur le photodétecteur ou sur un plan de ce dernier, et la lumière reçue dans ladite zone donnée (44) est détectée sans ou séparément de la lumière placée à l'extérieur de ladite zone donnée, réduisant ainsi l'effet de lumière diffusée depuis les autres dits plans dans l'échantillon, et ladite zone donnée (44) définie par une zone s'étendant entre des raies parallèles en travers du détecteur et le long duquel le spectre est dispersé pour que l'étape de détection de la lumière dans ladite zone donnée assure une action à foyer commun en une dimension.

3. Procédé selon la revendication 2, **caractérisé en ce que** l'action à foyer commun dans une deuxième dimension est assurée en faisant passer la lumière à travers un filtre spatial (14).

4. Procédé selon l'une des revendications précédentes,
**caractérisé en ce que** l'échantillon (18) est éclairé au niveau d'un point focalisé (19).

5. Procédé selon l'une des revendications précédentes,
**caractérisé en ce que** le photodétecteur (24) comprend un ensemble bidimensionnel de pixels (40), et la lumière qui est reçue dans ladite zone donnée (42, 44, 60) est détectée en traitant des données représentant une image reçue par ledit ensemble.

6. Procédé selon l'une quelconque des revendications précédentes, **caractérisé en ce que** ledit spectre est un spectre de lumière diffusée Raman.

7. Spectroscope comprenant:
des moyens (10, 12, 16) pour éclairer un échantillon (16) pour obtenir à partir de celui-ci un spectre de lumière diffusée:
des moyens (20) pour analyser ledit spectre;
un photodétecteur (24);
des moyens (22) pour faire passer et focaliser le spectre analysé vers le photodétecteur, la lumière diffusée depuis un plan donné dans l'échantillon étant ainsi amenée vers un foyer étroit dans une zone donnée (44) sur le photodétecteur, et
des moyens (24, 25) pour détecter la lumière qui est reçue dans ladite zone donnée (44) sur le photodétecteur;
**caractérisé en ce que** la lumière diffusée depuis d'autres plans dans l'échantillon est amenée vers un foyer plus diffus (46) sur le photodétecteur ou un plan de ce dernier, et ledit moyen de détection (24, 25) détecte la lumière reçue dans ladite zone donnée (44) sans ou séparément de la lumière à l'extérieur de ladite zone donnée, ce qui réduit ainsi l'effet de la lumière diffusée à partir desdits autres plans dans l'échantillon et ladite zone donnée est définie par une zone s'étendant entre des raies parallèles en travers du détecteur et le long duquel le spectre est dispersé, pour détecter la lumière dans ladite zone donnée assure une action à foyer commun en une dimension.

8. Appareil selon la revendication 7, **caractérisé en ce qu'**un filtre spatial (14) est prévu, à travers lequel passe la lumière, le filtre spacial assurant une action à foyer commun dans une deuxième dimension.

9. Appareil selon la revendication 7 ou la revendication 8, **caractérisé en ce que** le moyen d'éclairage (10, 12, 16) est placé pour éclairer l'échantillon (18) au niveau d'un point focalisé (19).

10. Appareil selon l'une des revendications 7 à 9, **caractérisé en ce que** le photodétecteur (24) comprend un ensemble bi-dimensionnel de pixels (40) et comprend des moyens de calcul (25) pour recevoir des données provenant de l'ensemble, représentant une image reçue par l'ensemble, et pour traiter lesdites données d'images pour détecter la lumière qui se trouve dans ladite zone donnée (42, 44, 60).

11. Appareil selon l'une quelconque des revendications 7 à 10, **caractérisé en ce que** ledit spectre est un spectre de lumière diffusée Raman.
